# EUROPEAN PATENT APPLICATION

(11) **EP 4 270 734 A1**
(43) Date of publication of application: **01.11.2023**
(21) Application number: 22170102.2
(22) Date of filing: 26.04.2022
(51) Int. Cl.: H02K 1/20, H02K 1/32, H02K 5/20, H02K 9/19

(54) **ELECTRIC MOTOR, ARRANGEMENT COMPRISING AN ELECTRIC MOTOR AND METHOD FOR OPERATING AN ELECTRIC MOTOR**

(71) Applicant: Valeo eAutomotive Germany GmbH, 91056 Erlangen (DE)
(72) Inventor: Lewandowski, Marek, 91056 C/o VSeA, Erlangen (DE)
(74) Representative: Valeo Powertrain Systems

(57) **Abstract**

Electric motor (1), comprising a housing (2), a stator (3) with stator windings (4) received in the housing (2) for generating a rotating electromagnetic field, a rotor (5) surrounded by the stator (3), having a rotor shaft (6), a laminated core (7) and rotor windings, protrusions (17) arranged on an axial side of the rotor (3), a cooling fluid supply which can be conveyed in a closed circuit for cooling the electric motor (1), an axially extending channel (13) for the return of cooling fluid (15), wherein the rotor (5) has at least one axial through-opening (18) for the supply of air to the protrusions (17) of the rotor (5). In addition, an arrangement (24) comprising the electric motor (1) and a gearbox (22) and a method of operating the arrangement (24) are described.

## Description

The invention refers to an electric motor, comprising a housing, a stator with windings for generating a rotating electromagnetic field received in the housing, a rotor surrounded by the stator, having a rotor shaft, a laminated core and rotor windings, protrusions arranged on an axial side of the rotor for generating an increased air pressure, a cooling fluid supply which can be conveyed in a closed circuit for cooling the electric motor, and an axially extending channel for the return of cooling fluid.

The invention also refers to an arrangement comprising such an electric motor, which is connected to a gearbox.

Electric machines of this type are increasingly being used in electrically powered vehicles and hybrid vehicles, predominantly as an electric motor for driving a wheel or an axle of a vehicle.

Such an electric motor is usually mechanically coupled to the gearbox for speed adjustment. In addition, the electric motor is usually electrically coupled to an inverter which generates an alternating voltage for operating the electric motor from a direct voltage supplied by a battery.

The gearbox usually contains a lubricating and/or cooling fluid, for example an oil. It has already been proposed to integrate an electric motor and a gearbox such that the electric motor shares the oil volume of the gearbox in order to cool components of the electric motor, in particular rotor windings and/or stator windings. In such an arrangement the gearbox and the electric motor can be arranged side-to-side, whereby the electric motor is preferably positioned at the outer side of the vehicle.

Under normal circumstances, when the vehicle is driving on a straight path or parked horizontally, the oil is returned by help of gravity through a channel to an oil sump in the gearbox housing. However, if the vehicle is driving on a path with a side slope, the cooling fluid may be prevented from returning to the oil sump. When the vehicle is taking a sharp curve at high speed, the centrifugal force will move the cooling fluid to the non-driven end of the electric motor, so that the cooling fluid will rise up to the point of flooding an air gap between rotor and stator of the electric motor. Cooling fluid which has entered the air gap will however increase friction and must therefore be avoided.

The object on which the invention is based is to provide an electric motor which prevents that cooling fluid remains in the non-driven end.

This object is solved by an electric motor with the features of claim 1.

The rotor of the inventive electric motor has at least one axial through-opening for the supply of air to the protrusions of the rotor. The invention is based on the idea that air can flow through the axial through-opening to the non-driven end, where the protrusions on the axial side of the rotor generate an increased air pressure. Cooling fluid, which remains in the non-driven end will be moved through the axially extending channel under the influence of the increased air pressure. Therefore, the combination of the protrusions with the axial through-opening of the rotor will accelerate return of the cooling fluid and prevent its accumulation in the non-driven end.

According to a preferred embodiment of the electric motor the protrusions are shaped as fins which extend in radial and axial direction and which are arranged along the circumference of the rotor. The protrusions act like fan blades which generate a constant flow of air which is directed to the radial outer area of the non-driven end of the electric motor. Furthermore, the protrusions also serve to cool the stator windings.

The rotor of the electric motor may comprise several through-openings which are arranged along the circumference of the rotor and which guarantee a constant and uniform airflow. For example, the rotor may comprise 4, 6, 8, 10 or 12 through-openings.

According to a preferred embodiment of the electric motor the rotor shaft is hollow and comprises a cavity with radial openings for supplying the cooling fluid. The radial openings may be positioned before and/or after the rotor windings in axial direction, so that cooling fluid can be supplied to both axial ends of rotor and stator in order to remove heat from the windings. From the non-driven end, the cooling fluid can return through the axially extending channel, which is arranged at the bottom of the electric motor. The cooling fluid is conveyed by a pump in a closed loop.

It is particularly preferred that the protrusions of the rotor are arranged at least at the non-driven end of the electric motor. However, protrusions can also be present at both axial sides of the rotor.

The cooling fluid can be forced out of the non-driven end more efficiently, when the protrusions of the rotor are facing an airflow restriction element, which is protruding from an axial inner side of the housing. Preferably, the airflow restriction element is ring-shaped. Between the protrusions of the rotor and the airflow restriction element only a small gap remains. Air from the one or more axial through-openings is sucked in and pushed by the protrusions of the rotor through the gap into the radial outer region of the non-driven end. The increased air pressure in this part of the electric motor forces the oil out of the non-driven end.

Preferably, the cooling fluid is an oil.
The axially extending channel for the return of cooling fluid can be arranged at different positions in the inventive electric motor, either inside the stator or inside a wall of the housing or between the outside of the stator and the inner side of the housing.

The invention further relates to an arrangement, comprising an inventive electric motor which is connected to a gearbox. The gearbox comprises a tank or a container for cooling fluid, often called an oil sump, in which cooling fluid is collected which is returned from the electric motor. A pump is used to circulate the cooling fluid in a closed circuit. It is preferred that the at least one axial through-opening of the rotor is communicating with the interior of the gearbox, so that air from the interior of the gearbox can be sucked into the non-driven end of the electric motor. The invention further refers to a method for operating an arrangement comprising the inventive electric motor and a gearbox, wherein air from the interior of the gearbox is sucked into the non-driven end of the electric motor through the at least one axial through-opening by the protrusions of the rotor.

According to the invention cooling fluid is conveyed from the non-driven end of the electric motor to the oil sump of the gearbox under the influence of the increased air pressure generated by the protrusions of the rotor.

The invention is explained below by means of a preferred example with reference to the drawings. The drawings are schematic representations and show:
- Fig. 1: a sectional view of an inventive electric motor,
- Fig. 2: an axial view of the rotor of the motor of Fig. 1; and
- Fig. 3: an arrangement comprising an inventive electric motor and a gearbox.

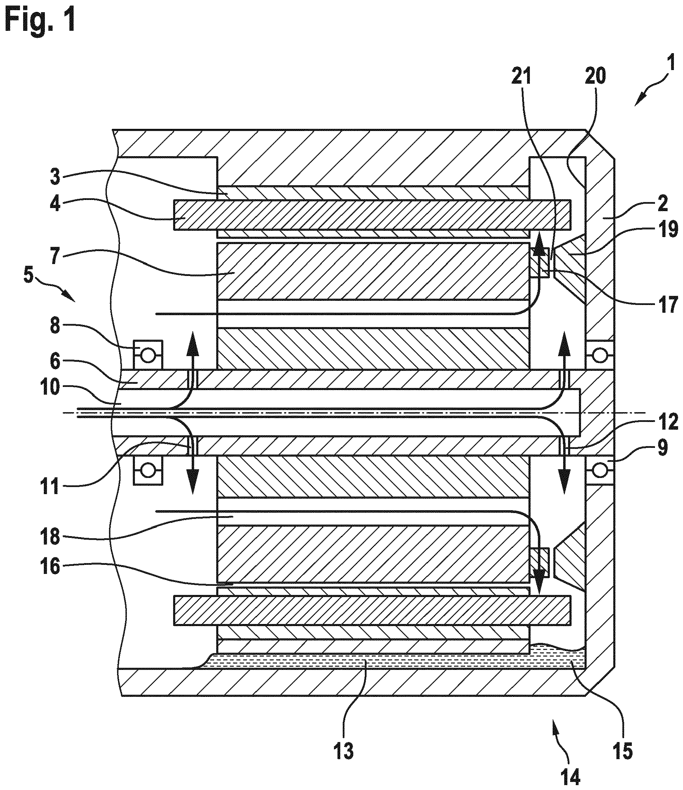

Fig. 1 discloses an electric motor 1 comprising a housing 2. A stator 3 is received in the housing 2, which comprises windings 4 for generating a rotating electromagnetic field. The windings 4 are protruding in axial direction from both ends of the stator 3. Stator 3 surrounds a rotor 5, having rotor shaft 6 and a laminated core 7 with rotor windings. Stator 3 and rotor 5 are separated by a small air gap 16.

The rotor shaft 6 is supported by bearings 8, 9. The rotor shaft 6 is hollow and comprises a cavity 10 with several radial openings 11, 12. A pressurized cooling fluid, in this embodiment an oil, is supplied to the interior of the electric motor 1 through the cavity 10 and the radial openings 11, 12 in order to cool components of the electric motor 1 like the stator windings 4 and the rotor windings. Accordingly, both axial ends of the electric motor 1 are provided with cooling fluid 15, which is conveyed in a closed circuit by a pump.

At the bottom of the electric motor 1 an axially extending channel 13 is arranged for the return of cooling fluid 15. In the installed state the channel 13 is arranged at the bottom of the electric motor 1. Under the influence of gravity cooling fluid 15 can return from the non-driven end 14 (the right side in Fig. 1) of the electric motor 1 to the opposite side (the left side in Fig. 1). In alternative embodiments the axially extending channel can also be arranged inside the stator or inside a wall of the housing.

The rotor 5 comprises several protrusions 17, which are axially protruding at the non-driven end side. In addition, the rotor 5 comprises several axial through openings 18 which enable a supply of air to the non-driven end 14 of the electric motor 1.

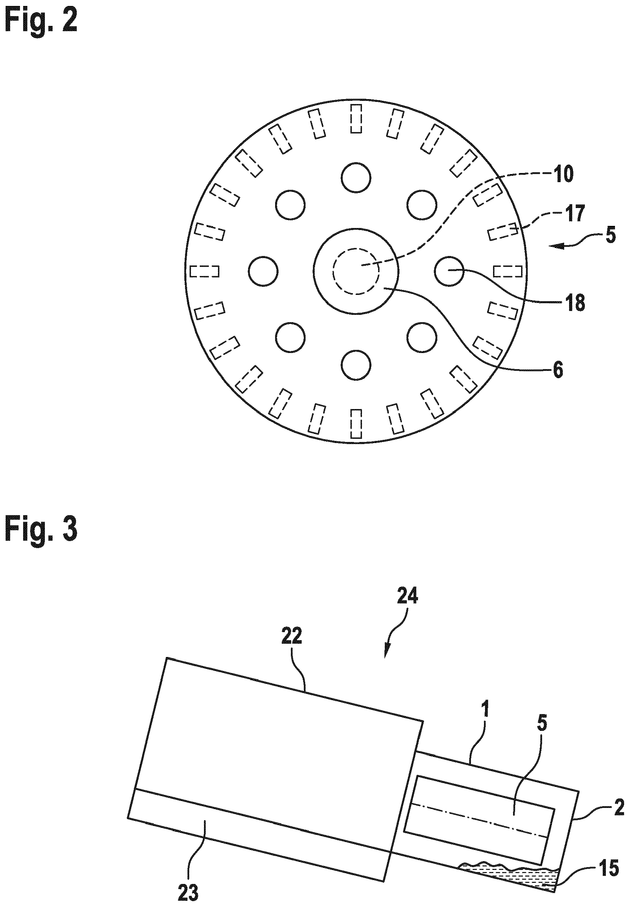

Fig. 2 is an axial view of the rotor 5, which comprises the protrusions 17 arranged in circumferential direction. Each protrusion 17 extends in axial and radial direction and is shaped like a fan blade. In Fig. 2 it is also visible that in this embodiment the rotor 5 comprises eight axial through openings 18 with a circular cross-section, which are arranged in circumferential direction radially inwards compared to the protrusions 17.

Fig. 1 shows that the protrusions 17 of the rotor 5 are facing an airflow restriction element 19, which is protruding from an inner side 20 of the housing 2. The airflow restriction element 19 has a trapezoidal cross section with slanted side surfaces. Between the outer end of the protrusions 17 and the annular airflow restriction element 19 a small air gap 21 is formed.

When the electric motor 1 is operated, the rotor 5 is rotated under the influence of a rotating electromagnetic field. In an alternative mode of operation, the rotor 5 can be driven via a gearbox by the motion of the vehicle. Oil, which is used as cooling fluid 15, is supplied under pressure through the cavity 10 of the rotor shaft 6. Through openings 11, 12 of the rotor shaft 6 both axial ends of the stator 3 are cooled. The cooling fluid 15 enters the radial outer region of the electric motor 1, in particular the non-driven end 14. Cooling fluid 15 flows through the axially extending channel 13 to the opposite side of the electric motor 1 and further to an oil sump in a gearbox, which is connected to the electric motor 1, under the influence of gravity.

In some operating conditions of conventional electric motors, in particular when the vehicle is driving or parked on a road with a side slope, there is a risk that cooling fluid may accumulate at the bottom of the housing in the non-driven end. In order to avoid this, the protrusions 17 of the rotor 5 generate a region of increased air pressure in the non-driven end 14, as they serve as fan blades. Air, which is sucked in and supplied through the axial through openings 18 of the rotor 5, is pushed through the small air gap 21 between the protrusions 17 and the airflow restriction element 19 in a radially outward direction. The increased air pressure in the radial outer region of the non-driven end 14 acts upon the cooling fluid 15 and forces it to return through the axially extending channel 13 to the opposite side of the electric motor 1 in axial direction.

Fig. 3 is a schematic drawing which shows an arrangement 24 comprising the electric motor 1, which is connected to a gearbox 22. The gearbox 22 is used to adapt the rotational speed of a driven wheel of a vehicle. The gearbox 22 and the electric motor 1 are integrated so that they share the same cooling fluid supply. An oil sump 23 is provided at the bottom of the gearbox 22. Cooling fluid 15 is conveyed by a pump in a closed loop through the gearbox 22 and the electric motor 1. Even when a vehicle is on a road with a side slope, cooling fluid 15 in the non-driven end 14 of the housing 2 of the electric motor 1 can be returned to the oil sump 23 of the gearbox 22 under the influence of the increased air pressure generated by the protrusions 17.

### List of reference numbers

- 1: electric motor
- 2: housing
- 3: stator
- 4: stator windings
- 5: rotor
- 6: rotor shaft
- 7: laminated core
- 8: bearing
- 9: bearing
- 10: cavity
- 11: opening
- 12: opening
- 13: channel
- 14: non-driven end
- 15: cooling fluid
- 16: air gap
- 17: protrusion
- 18: through opening
- 19: airflow restriction element
- 20: inner side
- 21: air gap
- 22: gearbox
- 23: oil sump
- 24: arrangement

## Claims

1. Electric motor (1), comprising:
- a housing (2),
- a stator (3) with stator windings (4) for generating a rotating electromagnetic field received in the housing (2),
- a rotor (5) surrounded by the stator (3), having a rotor shaft (6), a laminated core (7) and rotor windings,
- protrusions (17) arranged on an axial side of the rotor (3),
- a cooling fluid supply which can be conveyed in a closed circuit for cooling the electric motor (1),
- an axially extending channel (13) for the return of cooling fluid (15),
**characterized in that** the rotor (5) has at least one axial through-opening (18) for the supply of air to the protrusions (17) of the rotor (5).

2. Electric motor according to claim 1, wherein the protrusions (17) are shaped as fins which extend in radial and axial direction and which are arranged along the circumference of the rotor (5).

3. Electric motor according to claim 1 or 2, wherein the rotor (5) comprises several through-openings (18) which are arranged along the circumference of the rotor (5).

4. Electric motor according to any of the preceding claims, wherein the rotor shaft (6) is hollow and comprises a cavity (10) with radial openings (11, 12) for supplying the cooling fluid (15).

5. Electric motor according to any of the preceding claims, wherein the protrusions (17) of the rotor (5) are arranged at the non-driven end (14) of the electric motor (1).

6. Electric motor according to any of the preceding claims, wherein the protrusions (17) of the rotor (5) are facing an airflow restriction element (19), which is protruding from an axial inner side of the housing (2).

7. Electric motor according to any of the preceding claims, wherein the cooling fluid (15) is oil.

8. Electric motor according to any of the preceding claims, wherein the axially extending channel (13) for the return of cooling fluid (15) is arranged either
a) inside the stator (3) or
b) inside a wall of the housing (2) or
c) between the outside of the stator (3) and the inner side of the housing (2).

9. Arrangement (24), comprising an electric motor (1) according to any one of claims 1 to 8 which is connected to a gearbox (22).

10. Arrangement according to claim 9, wherein the at least one axial through-opening (18) of the rotor (5) is communicating with the interior of the gearbox (22).

11. Arrangement according to claim 9 or 10, wherein the gearbox (22) has an oil sump (23).

12. Method for operating an arrangement (24) according to any one of claims 9 to 11, wherein air from the interior of the gearbox (22) is sucked into the non-driven end (14) of the electric motor (1) through the at least one axial through-opening (18) by the protrusions (17) of the rotor (5).

13. Method according to claim 12, wherein cooling fluid (15) is conveyed from the non-driven end (14) of the electric motor (1) to the oil sump (23) of the gearbox (22) under the influence of increased air pressure generated by the protrusions (17).
